**Europäisches Patentamt**

**European Patent Office**

**Office européen des brevets**

(11) Veröffentlichungsnummer : **0 090 235**
**B1**

(12)     **EUROPÄISCHE PATENTSCHRIFT**

(45) Veröffentlichungstag der Patentschrift :
12.11.86

(51) Int. Cl.⁴ : **B 60 N   1/08**

(21) Anmeldenummer : **83102466.6**

(22) Anmeldetag : **12.03.83**

(54) Schiebesitzführung, insbesondere für Kraftfahrzeugsitze.

(30) Priorität : **31.03.82 DE 3211857**

(43) Veröffentlichungstag der Anmeldung :
**05.10.83 Patentblatt 83/40**

(45) Bekanntmachung des Hinweises auf die Patenterteilung : **12.11.86 Patentblatt 86/46**

(84) Benannte Vertragsstaaten :
**AT BE CH DE FR GB IT LI NL**

(56) Entgegenhaltungen :
**DE-A- 2 050 506**
**DE-A- 2 849 906**
**DE-C- 1 090 981**
**DE-C- 1 298 784**
**DE-C- 1 941 357**
**DE-U- 1 933 975**

(73) Patentinhaber : **Kronenberg GmbH & Co. KG**
**Hochstrasse 2**
**D-5653 Leichlingen 1 (DE)**

(72) Erfinder : **Jacobi, Rolf, Ing.-grad.**
**Gillicher Strasse 3**
**D-5650 Solingen 11 (DE)**

(74) Vertreter : **Peerbooms, Rudolf, Dipl.-Phys.**
**Postfach 200 208 Dickmannstrasse 45C**
**D-5600 Wuppertal 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Schiebesitzführung, insbesondere für Kraftfahrzeugsitze, welche aus zwei, an einer Seite offenen, mit abgewinkelten Randflanschen sich gegenseitig hintergreifenden Profilschienen und aus zwischen den Profilschienen angeordneten elastischen Mitteln zur Verhinderung von Klappergeräuschen besteht.

Bei bekannten Schiebesitzführungen (z. B. DE-C-12 98 784 und DE-C-19 41 357) bestehen die beiden Profilschienen aus einer C-Schiene und einer Hutschiene, deren nach außen abgewinkelte Randflansche von den doppelt abgewinkelten Randschenkeln der C-Schiene eingefaßt werden. Durch die DE-C-10 90 981 ist es ferner bekannt, zwei identische Profilschienen zu verwenden, von denen jede hälftig als C-Schiene und hälftig als Hutschiene profiliert ist.

Das wegen der erforderlichen Verschiebbarkeit der Schienen erforderliche Bewegungsspiel, welches bedingt durch Fertigungstoleranzen noch verstärkt vorliegen kann, führt bei Kraftfahrzeugen zu lästigen Klappergeräuschen, die nach dem Stand der Technik dadurch behoben werden, daß zwischen die Profilschienen elastisch verformbare Rollen oder dgl. zwischengefügt werden, die bei belastetem Sitz eine Materialkompression erfahren und bei Entlastung des Sitzes die Profilschienen wieder in ihre obere Anlageposition drücken. Darüber hinaus ist es bekannt, bandförmige, elastische Einlagen zwischen den beiden Profilschienen vorzusehen, auf denen Kugeln oder sonstige Wälzkörper ablaufen. Bei diesen bekannten Ausführungsformen treten jedoch nach längeren Betriebszeiten infolge Materialabrieb, Materialeindrückungen und Materialermüdung vielfach wieder Klappergeräusche auf. Darüber hinaus tragen die bekannten elastischen Mittel zur Verhinderung von Klappergeräuschen nicht zur Erhöhung der Ausbruchsicherheit der Schiebesitzführung bei Unfällen bei. Die Ausbruchsicherheit von Schiebesitzführungen ist aber insbesondere dann von entscheidender Bedeutung, wenn Sicherheitsgurte nicht mehr am Fahrzeugrahmen, sondern unmittelbar am Fahrzeugsitz verankert werden.

Der Erfindung liegt die Aufgabe zugrunde, eine Schiebesitzführung zu schaffen, die eine erhöhte Ausbruchsicherheit bei Unfällen aufweist und bei der zugleich Klappergeräusche oder dgl. auch über lange Betriebszeiten hinweg zuverlässig ausgeschlossen sind.

Zur Lösung dieser Aufgabe ist erfindungsgemäß vorgesehen, daß mit einer der Profilschienen eine federbelastete Spreizmechanik verbunden ist, welche mehrere, quer zur Längserstreckung der Profilschiene und parallel zur offenen Seite der Profilschiene auseinandergespreizte Laufstücke besitzt, denen an der anderen Profilschiene zwei sich gegenüberliegende rinnenförmige Laufflächen zugeordnet sind.

Der Erfindung zufolge sind zweckmäßigerweise die rinnenförmigen Laufflächen an einem Kastenprofil mit doppelt abgekanteten Seitenschenkeln vorgesehen und weisen die rinnenförmigen Laufflächen jeweils ein V-Profil auf. Die Erfindung bietet den großen Vorteil, daß nunmehr Federn beträchtlicher größe und hoher Federkraft zur Aufrechterhaltung des Anlagedruckes der Laufstücke an den Laufflächen verwendet werden können, da diese Federn nunmehr liegend, d. h. parallel zur offenen Seite der Profilschiene, innerhalb der inneren Schiene der Schiebesitzführung untergebracht werden können, wobei die Spreizfedern je nach Ausbildung der Hebel der Spreizmechanik quer zu den Profilschienen oder auch in Längsrichtung der Profilschienen orientiert werden können. Da von solchen Spreizfedern nur ein geringer Federungsweg, bezogen auf ihre eigene Länge, verlangt wird, erfahren sie auch über lange Zeit keine Materialüberbeanspruchung und können sie Abriebverluste, Materialeindrückungen und dgl. ausgleichen. Die Spreizmechanik hält die Laufstücke, unabhängig von der Belastung des Sitzes, immer in Anlage an den V-förmigen Laufflächen, und bewirkt bei Sitzentlastung eine Zentrierung, indem die Laufstücke zum Grund der V-Laufflächen gedrückt werden. Infolge dieser Maßnahmen sind Klappergeräusche dauerhaft ausgeschlossen.

Gemäß einer bevorzugten Ausführungsform der Erfindung ist vorgesehen, daß die Spreizmechanik am Bodenschenkel einer der Profilschienen und das Kastenprofil am Boden der anderen Profilschiene angebracht sind und daß die abgekanteten Seitenschenkel des Kastenprofils zwischen den Seitenschenkeln einer der Profilschienen mit engem Spiel eingefaßt sind. Infolge dieser Maßnahmen unterstützt das Kastenprofil als dritte Schiene zum einen die Gesamtstabilität der Schiebesitzführungen. Darüber hinaus steift das Kastenprofil bei unfallbedingten Beanspruchungen die innenliegende Profilschiene, im allgemeinen eine Hut-Schiene, aus und hält deren Flansche in der Umklammerung durch die Außenschiene.

Die Laufstücke können Gleitstücke sein. Bevorzugt werden der Erfindung zufolge als Laufstücke ballige Laufräder vorgesehen, deren Durchmesser größer als die Öffnungsbreite des Kastenprofils ist und die zumindest zum Teil mit ihren Achsen an spreizfederbalasteten Schwenkhebeln gelagert sind. Hierbei kann ein Laufrad an einem Arm eines Doppelhebels sitzen, zwischen dessen anderem Arm und einem einarmigen, ein zweites Laufrad tragenden Hebel eine Schraubendruckfeder eingespannt ist, und können zwei weitere Laufräder ortsfest an der Spreizmechanik gelagert sein. Infolge ihres verhältnismäßig großen Durchmessers sind diese Laufräder an zwei einander gegenüberliegenden Stellen durch die abgekanteten Seitenschenkel des Kastenprofiles übergriffen. Da die abgekanteten Seitenschenkel des Kastenprofiles ihrerseits wiederum von den Seitenschenkeln der Hut-Schiene einge-

faßt sind, ist auch die Spreizmechanik sicher im Kastenprofil gehalten und trägt zur Ausbruchfestigkeit der Schiebesitzführung bei Unfällen bei.

Die Erfindung wird im folgenden anhand der Zeichnung näher erläutert, in der zeigen :

Figur 1 in Draufsicht eine, zugleich mit einer Verstellvorrichtung versehene Schiebesitzführung nach der Erfindung,

Figur 2 eine Vorderansicht auf die Schiebesitzführung nach Figur 1,

Figur 3 eine Stirnansicht auf die Schiebeführung, in Figur 2 von links gesehen,

Figur 4 in Draufsicht eine innerhalb der Schiebesitzführung angeordnete Spreizmechanik,

Figur 5 eine Seitenansicht auf die Spreizmechanik nach Figur 4,

Figur 6 eine hinsichtlich der Verstellvorrichtung abgewandelte Ausführungsform,

Figur 7 eine Seitenansicht auf eine weitere abgewandelte Ausführungsform der Verstellvorrichtung,

Figur 8 eine Teildraufsicht zu Figur 7,

Figuren 9 und 10 jeweils abgewandelte Querschnittsformen der Schiebesitzführungen,

Figuren 11, 12, 13 drei weitere Ausführungsformen der Spreizmechanik und

Figuren 14 und 15 eine weitere Ausführungsform in Draufsicht und im Querschnitt gemäß Linie XV-XV in Figur 14.

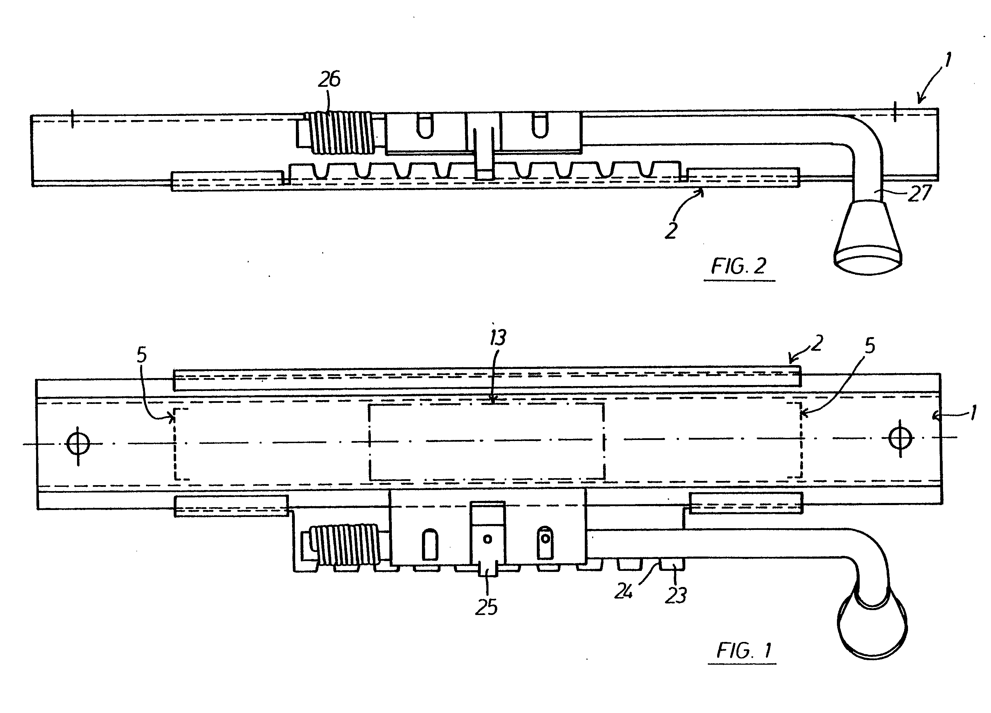

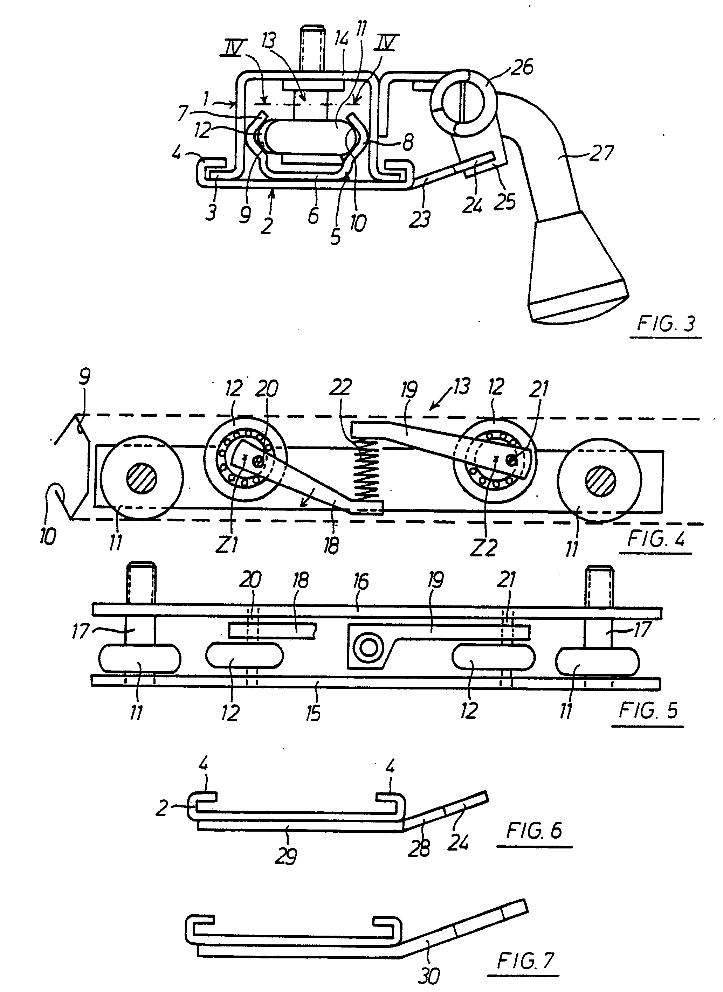

Die in den Fig. 1 bis 5 gezeigte Schiebesitzführung besteht aus einer inneren und einer äußeren Profilschiene 1, 2, von denen die innere als Hut-Schiene und die äußere, am Fahrzeugboden zu befestigende Schiene als C-Schiene ausgebildet ist. Die Hut-Schiene 1 ist mit ihren nach außen abgewinkelten Randflanschen 3 in die doppelt abgewinkelten Randflansche 4 der C-Schiene 2 eingeschoben und dort mit einem gewissen Spiel aufgenommen. Am Boden der C-Schiene 2 ist ein Kastenprofil 5 mit seinem Bodenschenkel 6 befestigt, z. B. angeschweißt, dessen Seitenschenkel 7, 8 doppelt abgekantet sind und einander gegenüberliegende, im Querschnitt V-förmige Laufflächen 9, 10 für Laufräder 11, 12 bilden. Die Laufräder 11, 12 sind liegend an einer Spreizmechanik 13 angeordnet, die am Bodenschenkel 14 des Hutprofiles 1 befestigt ist und in den Fig. 4 und 5 in größerem Maßstab dargestellt ist.

Die Spreizmechanik 13 besteht aus einem unteren und einem oberen Blechstreifen 15, 16, zwischen deren Enden jeweils ein Laufrad 11 um feste Achsen 17 drehbar gelagert ist. Zwischen den Blechstreifen 15, 16 sind ferner zwei Hebel 18, 19 um Achsen 20 bzw. 21 schwenkbar, die mit ihren langen Armen aufeinander zugewandt sind und zwischen denen eine Schraubenfeder als Spreizfeder 22 angeordnet ist. Die Laufräder 12 bestehen aus einem Laufring, welcher über ein Kugellager mit einer Nabe verbunden ist, und die Lagerachsen 20, 21 der Hebel 18, 19 sind jeweils exzentrisch an den Naben angeordnet. Der Hebel 18 ist hierbei als Doppelhebel wirksam, da das Zentrum Z 1 des von ihm getragenen Laufrades 12 auf einem gesonderten, kurzen Hebelarm liegt. Demgegenüber ist der Hebel 19 als einarmiger Hebel gelagert, da das Zentrum Z 2 des Laufrades zwischen Hebelachse 21 und Spreizfeder 22 liegt. Infolgedessen werden durch die Spreizfeder 22 beide Laufrollen 12 in Fig. 4 nach oben hin zu der einen V-förmigen Lauffläche des Kastenprofiles gedrückt, während die feststehenden Laufrollen 11 an der anderen V-förmigen Lauffläche anliegen. In Fig. 1 ist strichpunktiert die Anordnung der Spreizmechanik nach Fig. 4 innerhalb der Schiebesitzführung angedeutet.

Wie aus Fig. 3 ersichtlich ist, stützt das Kastenprofil 5 mit seinen Seitenschenkeln die Seitenschenkel des Hut-Profiles 1 verhältnismäßig nahe seiner Randflansche 3 ab, wodurch die Ausbruchfestigkeit des Eingriffes von Hut-Schiene 1 und C-Schiene 2 in erhöhtem Maße sichergestellt ist. Infolge des großen Durchmessers können die Laufräder nicht durch die offene Seite des Kastenprofiles 5 herausgezogen werden. Einer Spreizung der abgekanteten Seitenflächen 7, 8 wirkt jedoch die Hut-Schiene entgegen, die in Verbindung mit der C-Schiene 2 ein Rohr bildet, das das Kastenprofil 5 eng umschließt. Das Kastenprofil 5 besitzt hierbei vorzugsweise die gleiche Länge wie die C-Schiene 2.

Beim Ausführungsbeispiel nach Fig. 1 bis 3 ist die C-Schiene im mittlerem Bereich an einer Seite zur Bildung eines Lappens 23 aufgeklappt, welcher kammartig mit Ausnehmungen 24 versehen ist, in die ein Rastnocken 25 durch die Kraft einer Feder 26 gehalten ist. Mittels eines Handhebels 27 kann der Nocken 25 aus den Ausnehmungen 24 herausgeschwenkt und in bekannter Weise eine Stizverstellung vorgenommen werden.

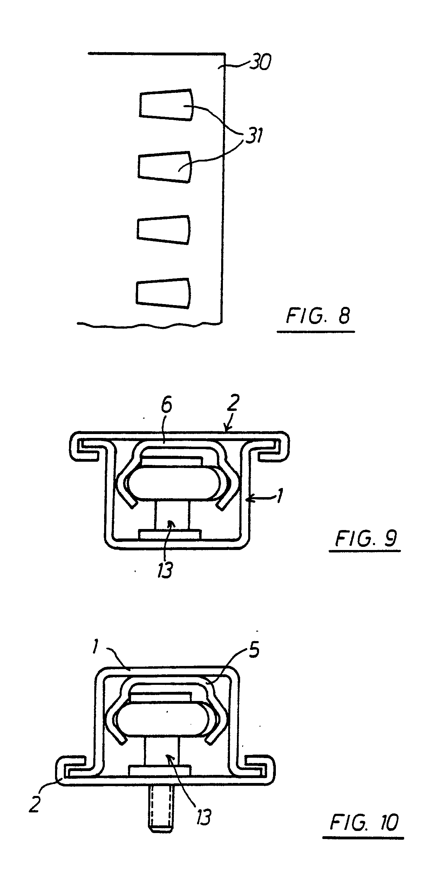

Fig. 6 veranschaulicht eine Abwandlung, bei welcher die C-Schiene 2 auf beiden Seiten durchgehende, nicht ausgeschnittene Randflansche 4 besitzt und bei der der die Ausnehmungen 24 tragende Lappen 28 von einem Blechstreifen 29 abgebogen ist, welcher an die Unterseite des Bodenschenkels des C-Profiles 2 angeschweißt oder angeschraubt ist. Durch diese Maßnahme wird die Ausbruchfestigkeit der beiden Profilschienen erhöht. Bei der in Fig. 7 und 8 gezeigten Ausführungsformen ist an Stelle eines Rastkammes mit randoffenen Ausnehmungen 24 ein Rastgitter 30 mit diskreten Rastlanglöchern 31 vorgesehen, in die der Rastnocken 25 einschwenkt. Durch diese gitterförmige Ausbildung wird mit geringem Materialaufwand die Ausbruchfestigkeit des den Rastnocken 25 aufnehmenden Rastbleches 30 beträchtlich erhöht.

Fig. 9 veranschaulicht eine Ausführungsform, bei welcher die Profile der Schiebesitzführung nach Fig. 1 bis 3 in einer um 180° gewendeten Lage angeordnet sind und also die U-Schiene am Fahrzeugboden und die C-Schiene am Fahrzeugsitz befestigt werden.

Bei dem in Fig. 10 gezeigten Ausführungsbeispiel ist die C-Schiene wiederum unten angeordnet, trägt hier aber die Spreizmechanik 13, während das Kastenprofil 5 an der Hut-Schiene 1 befestigt ist.

Der Erfindung zufolge ist es ferner möglich, die gezeigten Schienensitzführungen auch in einer um 90° gewendeten Lage einzubauen, in der die Schienen dann im wesentlichen nur auf den feststehenden Rollen 11 laufen, die anderen Rollen 12 eine Klappergeräusche vermeidende Einspannung bewirken und den ineinandergreifenden Randflanschen 3 und 4 von Hut- und C-Schiene im wesentlichen nur noch die Aufgabe zukommt, eine hohe Ausbruchfestigkeit der Schiebesitzführung im Hinblick auf Unfälle zu gewährleisten. Auch bei einer solchen hochkantstehenden Bauweise unterstützen das Kastenprofil und die Spreizmechanik die Ausbruchfestigkeit der Schiebesitzführungen.

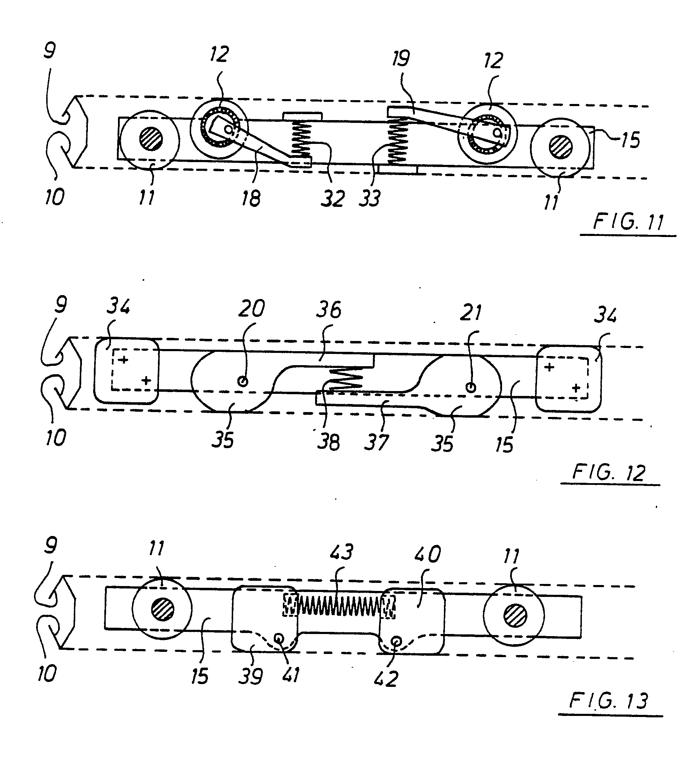

Fig. 11 zeigt eine gegenüber Fig. 4 abgewandelte Ausführungsform der Spreizmechanik, bei der die Hebel 18, 19 jeweils durch eine gesonderte Feder 32, 33 belastet sind.

Bei der Ausführungsform nach Fig. 12 sind an den Blechstreifen 15, 16 der Spreizmechanik anstelle der Laufräder 11 Kunststoffgleitstücke 34 und anstelle der Laufräder 12 exzentrisch gelagerte um die Achsen 20, 21 schwenkbare Kunststoffgleiter 35 vorgesehen, zwischen deren einander vorbeigehenden Verlängerungshebeln 36, 37 eine Spreizfeder 38 eingespannt ist, die die Gleiter 35 gegen die Lauffläche 10 und die Gleitstücke 34 gegen die Lauffläche 9 drückt.

Bei der Spreizmechanik nach Fig. 13 sind einerseits Laufräder 11 und andrerseits Kunststoffgleiter 39, 40 vorgesehen, die in Draufsicht etwa quadratisch sind und im Bereich einer Ecke um Achsen 41, 42 gegen die Lauffläche 10 schwenkbar sind. Zwischen den jeweils den Lagerstellen benachbarten Ecken der Gleiter 39, 40 ist eine Spreizfeder 43 eingespannt, die hier parallel zur Schienenlängserstreckung orientiert ist und folglich sehr lang bemessen werden kann.

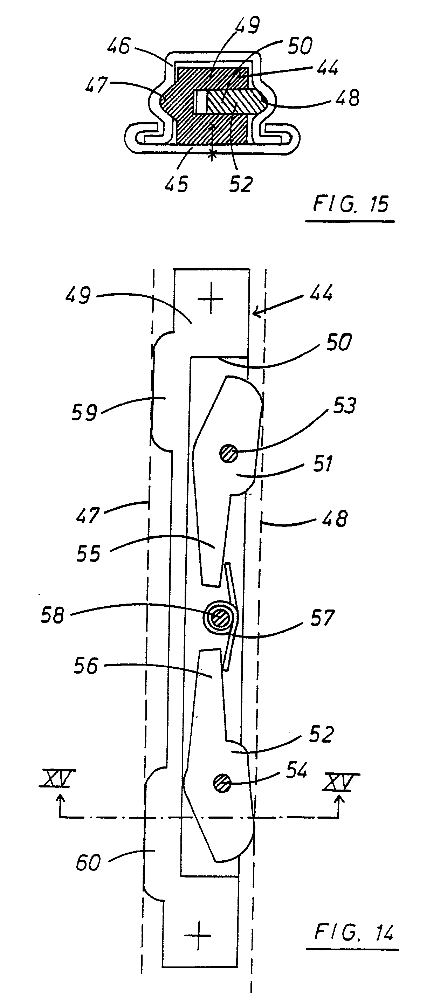

Die Fig. 14 und 15 zeigen eine besonders ausbruchsichere und preiswert herstellbare Ausführungsform, bei welcher die Spreizvorrichtung 44 am Boden einer C-Profilschiene 45 befestigt ist, die gegenüber der anderen hutförmigen Profilschiene 46 verschiebbar ist. Diese Hutschiene 46 weist an ihren parallelen Seitenschenkeln einander gegenüberliegende, rinnenförmige Laufflächen 47, 48 auf, in die die Spreizmechanik 44 eingreift. Die Spreizmechanik 44 besteht aus einem länglichen, den Innenraum der Hutschiene 46 weitgebend einnehmenden Vollmaterialkörper 49, der mit einer zu der einen Lauffläche 48 hin offenen Tasche 50 versehen ist. In der Tasche sind zwei Laufstücke 51, 52, auf zwei die Tasche durchsetzenden Achsen 53, 54 schwenkbar als Doppelhebel gelagert, die mit ihrem Kraftarm 55, 56 aufeinander zugerichtet sind. Die Kraftarme 55, 56 sind durch die Schenkel einer Schenkelfeder 57 belastet, welche auf einer die Tasche ebenfalls durchsetzenden, zwischen den Kraftarm 55, 56 angeordneten Achse 58 befestigt ist. Die Laufstücke 51, 52 greifen folglich mit ihren außenliegenden Enden in die eine Lauffläche 48. Die Laufstücke 51, 52 sind plattenförmig ausgebildet und besitzen eine Dicke von etwas weniger als die lichte Innenweite der Taschen 50.

An der der Taschenöffnung gegenüberliegenden Seite ist der Vollmaterialkörper 49 mit zwei angeformten Laufnasen 59, 60 versehen, die in die rinnenförmige Lauffläche 47 eingedrückt werden.

## Patentansprüche

1. Schiebesitzführung, insbesondere für Kraftfahrzeugsitze, bestehend aus zwei, an einer Seite offenen, mit abgewinkelten Randflanschen (3) sich gegenseitig hintergreifenden Profilschienen (1, 2) und aus zwischen den Profilschienen angeordneten elastischen Mitteln (13) zur Verhinderung von Klappergeräuschen, dadurch gekennzeichnet, daß mit einer (1) der Profilschienen (1, 2) eine federbelastete Spreizmechanik (13) verbunden ist, welche mehrere, quer zur Längserstreckung der Profilschienen und parallel zur offenen Seite der Profilschienen auseinandergespreizte Laufstücke (11, 12) besitzt, denen an der anderen Profilschiene (2) zwei sich gegenüberliegende, rinnenförmige Laufflächen (9, 10) zugeordnet sind.

2. Schiebesitzführung nach Anspruch 1, dadurch gekennzeichnet, daß die rinnenförmigen Laufflächen (9, 10) an einem Kastenprofil (5) mit doppelt abgekanteten Seitenschenkeln (7, 8) angeordnet sind und jeweils ein V-Profil besitzen.

3. Schiebesitzführung nach den Ansprüchen 1 und 2, dadurch gekennzeichnet, daß die Spreizmechanik (13) am Bodenschenkel einer der Profilschienen (1) und das Kastenprofil (5) am Boden der anderen Profilschiene (2) angebracht sind und daß die abgekanteten Seitenschenkel (7, 8) des Kastenprofils (5) zwischen den Seitenschenkeln einer der Profilschienen (1) mit engem Spiel eingefaßt sind.

4. Schiebesitzführung nach den Ansprüchen 1 bis 3, dadurch gekennzeichnet, daß die beiden Profilschienen (1, 2) ein Paar aus C-Schiene (2) und Hut-Schiene (1) sind, und daß das Kastenprofil (5) die Seitenschenkel der Hut-Schiene auf deren dem Randflansch (3) benachbarten Hälfte untergreift.

5. Schiebesitzführung nach einem oder mehreren der Ansprüche 1 bis 4, dadurch gekennzeichnet, daß die Laufstücke ballige Laufräder (11, 12) sind, deren Durchmesser größer als die Öffnungsbreite des Kastenprofiles (5) ist und die zumindest zum Teil mit ihrer Achse an spreizfederbelasteten Schwenkhebeln (18, 19) gelagert sind.

6. Schiebesitzführung nach Anspruch 5, dadurch gekennzeichnet, daß ein Laufrad (12) an einem Arm eines Doppelhebels (18) sitzt, zwischen dessen anderen Arm und einem einarmigen, ein zweites Laufrad (12) tragenden Hebel (19) eine Schraubendruckfeder (22) eingespannt ist, und daß zwei weitere Laufräder (11) ortsfest an der Spreizmechanik (13) gelagert sind.

7. Schiebesitzführung nach den Ansprüchen 1 bis 4, dadurch gekennzeichnet, daß alle oder einige Laufstücke Kunststoffgleitstücke (34, 35, 39, 40) sind.

8. Schiebesitzführung nach den Ansprüchen 1 bis 4, dadurch gekennzeichnet, daß die Laufstücke (11, 39, 40) an einer Spreizmechanik sitzen, deren Spreizfeder (43) eine in Längsrichtung der Schienen orientierte Schraubendruckfeder ist.

9. Schiebesitzführung nach Anspruch 1, dadurch gekennzeichnet, daß die rinnenförmigen Laufflächen (47, 48) an den parallelen Seitenschenkeln einer Hutschiene (46) angeordnet sind und daß die Spreizmechanik (44) einen an der anderen, C-förmigen Profilschiene (45) befestigten, den Querschnitt der Hutschiene (46) weitgehend ausfüllenden, länglichen Vollmaterialkörper (49) besitzt, an dem zwei unter Federbelastung in eine der Laufflächen (47, 48) eingreifende Laufstücke (51, 52) schwenkbar gelagert sind.

10. Schiebesitzführung nach Anspruch 9, dadurch gekennzeichnet, daß der Vollmaterialkörper (49) mit einer zu einer Lauffläche (48) hin offenen Tasche (50) versehen ist, in der die beiden Laufstücke (51, 52) in enger Einfassung zwischen den Taschenwänden als Doppelhebel mit aufeinander zugerichteten Kraftarmen (55, 56) gelagert sind.

11. Schiebesitzführung nach Anspruch 10, dadurch gekennzeichnet, daß die beiden Kraftarme (55, 56) durch die Schenkel einer Schenkelfeder (57) belastet sind, welche auf einer die Tasche (50) durchsetzenden Achse (58) angeordnet ist.

12. Schiebesitzführung nach Anspruch 10, dadurch gekennzeichnet, daß der Vollmaterialkörper (49) an seiner der Taschenöffnung gegenüberliegenden Seite mit zwei in die andere Lauffläche (47) eingreifenden Laufnasen (59, 60) versehen ist.

13. Schiebesitzführung nach Anspruch 12, dadurch gekennzeichnet, daß der Vollmaterialkörper (49) und die schwenkbaren Laufstücke (51, 52) aus Kunststoff hoher Gleitfähigkeit bestehen.

**Claims**

1. Sliding seat guide, especially for the seats of motor vehicles consisting of two profile rails (1, 2) open on one side, with bent marginal flanges (3) arranged one behind the other and of elastic means (13) disposed between the profile rails for the prevention of rattling noises, characterized in that a spring-loaded, spreading mechanism (13) is connected with one (1) of the profile rails (1, 2) which mechanism has several running pieces (11, 12) spreading apart transversely to the longitudinal extent of the profile rails and in parallel to the open side of the profile rails, to which pieces two grooveshaped, running surfaces (9, 10) facing each other are assigned on the other profile rail (2).

2. Sliding seat guide as in claim 1, characterized in that the grooveshaped running surfaces (9, 10) are disposed on a box profile (5) with doubly bevelled, lateral sides (7, 8) and always have a V-profile.

3. Sliding seat guide as in claims 1 and 2, characterized in that the spreading mechanism (13) is attached at the bottom leg of one of the profile rails (1) and the box profile (5) is attached on the bottom of the other profile rail (2), and that the bevelled, lateral legs (7, 8) of the box profile (5) are enclosed between the lateral legs of one of the profile rails (1) with a tight clearance.

4. Sliding seat guide as in claims 1 to 3, characterized in that the two profile rails (1, 2) are a pair consisting of C-rail (2) and top hat rail (1), and in that the box profile (5) reaches below the lateral legs of the top hat rail on their half adjacent to the marginal flange (3).

5. Sliding seat guide as in one or several of the claims 1 to 4, characterized in that the running pieces are spherical running wheels (11, 12) the diameter of which is greater than the opening with of the box profile (5) and which are mounted at least partially with their axle on spreading, spring-loaded, swivelling levers (18, 19).

6. Sliding seat guide as in claim 5, characterized in that one running wheel (12) is seated on an arm of a double lever (18), between its other arm and a one-armed lever (19) carrying a second running wheel (12) a pressure spring (22) is clamped in, and in that two additional running wheels (11) are mounted locally fixed on the spreading mechanism (13).

7. Sliding seat guide as in claims 1 to 4, characterized in that all or a few running pieces are gliding pieces made of synthetic material (34, 35, 39, 40).

8. Sliding seat guide as in claims 1 to 4, characterized in that the running pieces (11, 39, 40) are seated on a spreading mechanism, the spreading spring (43) of which is a screw pressure spring oriented in the longitudinal direction of the rails.

9. Sliding seat guide as in claim 1, characterized in that the grooveshaped running surfaces (47, 48) are disposed on the parallel lateral legs of a top hat rail (46) and that the spreading mechanism (44) has an elongated body of full material (49) largely filling out the transverse cut of the top hat rail (46) attached at the other C-shaped profile rail (45) on which body two running pieces (51, 52) are mounted swivelably engaging under spring loading with one of the running surfaces (47, 48).

10. Sliding seat guide as in claim 9, characterized in that the full material body (49) is provided with a pocket (50) open toward one of the running surfaces (48), in which pocket the two running pieces (51, 52) are mounted in tight enclosure between the walls of the pocket as a double lever with power arms (55, 56) directed toward each other.

11. Sliding seat guide as in claim 10, characterized in that the two power arms (55, 56) are loaded by the legs of a leg spring (57), which spring is disposed on an axle (58) penetrating the pocket (50).

12. Sliding seat guide as in claim 1, characterized in that the full material body (49) at its side lying opposite the opening of the pocket is provided with two running projections (59, 60) engaging with the other running surface (47).

13. Sliding seat guide as in claim 12, characterized in that the full material body (49) and the swivelably running pieces (51, 52) consist of a synthetic material of a high capacity for gliding.

**Revendications**

1. Guide de siège coulissant, en particulier pour sièges de véhicules automobiles, constitué de deux rails profilés (1, 2) en prise l'un avec l'autre, ouverts d'un côté et munis de bords (3) repliés, et de moyens élastiques (13) disposés entre les rails, pour empêcher les bruits de claquement, caractérisé par le fait qu'à un (1) des rails (1, 2) est relié un mécanisme d'écartement (13) rappelé par ressort, qui comporte plusieurs pièces de roulement ou glissement (11, 12) écartées les unes des autres transversalement à l'extension longitudinale des rails et parallèlement au côté ouvert des rails, et auxquelles sont associées, sur l'autre (2) rail, deux surfaces de roulement ou glissement (9, 10), en forme de gouttière, en faisant face.

2. Guide de siège coulissant selon la revendication 1, caractérisé par le fait que les surfaces de roulement ou glissement en forme de gouttière (9, 10) sont montées, avec des branches latérales (7, 8) à double pliure, sur un profilé caisson (5) et présentent chacune un profil en V.

3. Guide de siège coulissant selon les revendications 1 et 2, caractérisé par le fait que le mécanisme d'écartement (13) est monté sur la branche de fond d'un des rails (1) et le profilé caisson (5) sur le fond de l'autre rail (2) et les branches latérales repliées (7, 8) du profilé caisson (5) sont insérées entre les branches latérales d'un (1) des rails, avec un faible jeu.

4. Guide de siège coulissant selon les revendications 1 à 3, caractérisé par le fait que les deux rails (1, 2) forment un couple de rail en C (2) et de rail en chape (1) et le profilé-caisson (5) porte contre les branches latérales du rail en chape sur leur moitié voisine du bord (3).

5. Guide de siège coulissant selon l'une des revendications 1 à 4, caractérisé par le fait que les pièces de roulement sont des roues bombées (11, 12) dont le diamètre est supérieure à la largeur d'ouverture du profilé-caisson (5) et qui sont portées, au moins en partie, par leur axe, sur des leviers oscillants (18, 19) rappelés écartés par ressort.

6. Guide de siège coulissant selon la revendication 5, caractérisé par le fait qu'une roue (12) repose sur un bras d'un levier double (18), entre l'autre bras duquel et un levier (19) à un seul bras, et portant une deuxième roue (12), est comprimé un ressort à boudin (22) et deux autres roues (11) sont montées en position fixe sur le mécanisme d'écartement (13).

7. Guide de siège coulissant selon les revendications 1 à 4, caractérisé par le fait que toutes ou certaines pièces de roulement ou glissement sont des pièces coulissantes en matière plastique (34, 35, 39, 40).

8. Guide de siège coulissant selon les revendications 1 à 4, caractérisé par le fait que les pièces de roulement ou glissement (11, 39, 40) siègent sur un mécanisme d'écartement dont le ressort d'écartement (43) est un ressort à boudin orienté en direction longitudinale des rails.

9. Guide de siège coulissant selon la revendication 1, caractérisé par le fait que les surfaces de roulement ou glissement en forme de gouttière (47, 48) sont disposées sur les branches latérales parallèles d'un rail en chape (46) et le mécanisme d'écartement (44) possède un corps en matériau plein (49) étendu en longueur, remplissant sensiblement la section du rail en chape (46) et fixé à l'autre rail en C (45), deux pièces de roulement ou glissement (51, 52), en prise, avec rappel élastique, dans une surface de roulement ou glissement (47, 48), étant montée pivotantes sur le dit corps plein (49).

10. Guide de siège coulissant selon la revendication 9, caractérisé par le fait que le corps en matériau plein (49) est muni d'une poche (50) ouverte en direction d'une surface de roulement ou glissement (48) et dans laquelle les deux pièces de roulement ou glissement (51, 52) sont montées, sous forme de levier double à bras de force (55, 56) dirigées l'un vers l'autre, étroitement encadrées entre les parois de la poche.

11. Guide de siège coulissant selon la revendication 10, caractérisé par le fait que les deux bras de force (55, 56) sont chargés par les branches d'un ressort à branches (57) monté sur un axe (58) traversant la poche (50).

12. Guide de siège coulissant selon la revendication 10, caractérisé par le fait que le corps en matériau plein (49) est muni, sur son côté opposé à l'ouverture de la poche, de deux nez de glissement (59, 60) engagés dans l'autre surface de glissement (47).

13. Guide de siège coulissant selon la revendication 12, caractérisé par le fait que le corps en matériau plein (49) et les pièces de glissement (51, 52) pivotantes sont en matière plastique à haute capacité de glissement.

FIG. 2

FIG. 1

FIG. 3

FIG. 4

FIG. 5

FIG. 6

FIG. 7

0 090 235

FIG. 8

FIG. 9

FIG. 10

3

FIG. 11

FIG. 12

FIG. 13

FIG. 15

FIG. 14

5